# FASCICULE DE BREVET EUROPEEN

(11) **EP 0 470 922 B1**
(45) Date de publication et mention de la délivrance du brevet: **05.04.1995**
(21) Numéro de dépôt: 91500094.7
(22) Date de dépôt: 09.08.1991
(51) Int. Cl.: B65G 47/29, B65G 15/12, B65G 47/14

(54) **Machines automatiques de positionnement vertical de récipients**
Automatische Maschinen zur vertikalen Positionierung von Behältern
Automatic machines for vertically positioning containers

(30) Priorité: 10.08.1990 FR 9010491
(43) Date de publication de la demande: 12.02.1992
(73) Titulaire: Marti Sala, Jaime, E-08017 Barcelona (ES)
(72) Inventeur: Marti Sala, Jaime, E-08017 Barcelona (ES)
(74) Mandataire: Manresa Medina, Enrique

(56) Documents cités:
- FR-A- 2 593 478
- GB-A- 1 386 771
- US-A- 2 989 162
- US-A- 3 722 663
- US-A- 4 709 800
- PATENT ABSTRACTS OF JAPAN, vol. 8, no. 16 (M-270)(1453), 24 Janvier 1984 & JP-A-58 177 819 (NORITAKE KANPANII RIMITEDO) 18 Octobre 1983

## Description

L'invention concerne des perfectionnements apportés aux machines automatiques de positionnement vertical de récipients, de forme et de dimensions quelconques, et d'alimentation, en ligne, d'une installation d'embouteillage, du type comprenant des logements pour la réception et le transport des récipients et des moyens pour leur transfert, par gravité, en position verticale, goulot dirigé vers le haut, vers l'intérieur d'une série de goulottes de guidage en chute, équidistantes, délimitées par un carter de la machine de positionnement enveloppant, en circuit fermé, animées d'un mouvement de translation le long dudit circuit, desquelles sont évacués lesdits récipients, au travers d'une ouverture du carter de la machine positionneuse et avec la coopération de profils de déviation qui agissent sur la partie basse des récipients, jusqu'à une bande transporteuse pourvue de barres d'appui latérales, lesdits perfectionnements consistant à rapprocher les récipients sortant de la machine positionneuse et repris par la bande transporteuse alimentant l'installation d'embouteillage (voir par exemple le document US-A-4 709 800).

Parmi les moyens connus de reprise des récipients en sortie des machines positionneuses, il existe:
- celui utilisant un tapis roulant pourvu de trous reliés à une chambre d'aspiration pneumatique et prévus pour la rétention stable des récipients sur le tapis, par leur base: le moyen en question n'effectue aucun rapprochement des récipients entre eux qui restent à une distance équivalente à celle des goulottes de guidage en chute de la machine positionneuse;
- celui utilisant, pour le transfert des récipients sur le tapis roulant, une pièce tournante en forme d'étoile qui a pour effet de prendre chaque récipient en sortie de goulotte de chute pour le transférer sur la bande transporteuse: le moyen en question nécessite une parfaite synchronisation entre la vitesse de déplacement des goulottes et celle de déplacement des cavités de la pièce en étoile, avec comme conséquence, dans le cas d'une mauvaise synchronisation ou un mauvais positionnement des récipients, l'écrasement de ces derniers.

L'invention vise à réaliser des perfectionnements mettant en oeuvre des moyens placés au niveau de la bande transporteuse, en sortie de la machine positionneuse, et constitués par:
- au moins un premier moyen de freinage et d'entrainement des récipients, animé d'un mouvement de translation, qui se trouve sur le parcours desdits récipients, le long de la partie de la bande transporteuse contiguë à la machine positionneuse, et dont l'action provoque une diminution de la vitesse de sortie et d'avance sur la bande desdits récipients avec pour effet le rapprochement relatif de ces derniers, ledit moyen coopérant en plus au maintien des récipients en position verticale et évacuant vers l'extérieur ceux qui ont été renversés accidentellement;
- un deuxième moyen de freinage des récipients opérant transversalement et latéralement sur le parcours desdits récipients sur la bande transporteuse, situé en aval du premier moyen cité, dont l'action a pour effet de rapprocher les récipients en les maintenant jusqu'à ce qu'ils soient au contact les uns des autres et de permettre leur passage, dans cette situation, par une intéraction permanente avec ledit deuxième moyen de freinage.

Les caractéristiques et les avantages de l'invention vont apparaître plus clairement à la lecture de la description détaillée qui suit d'un mode de réalisation préféré de l'invention donné à titre d'exemple seulement et représenté aux dessins annexés. Sur ces dessins:

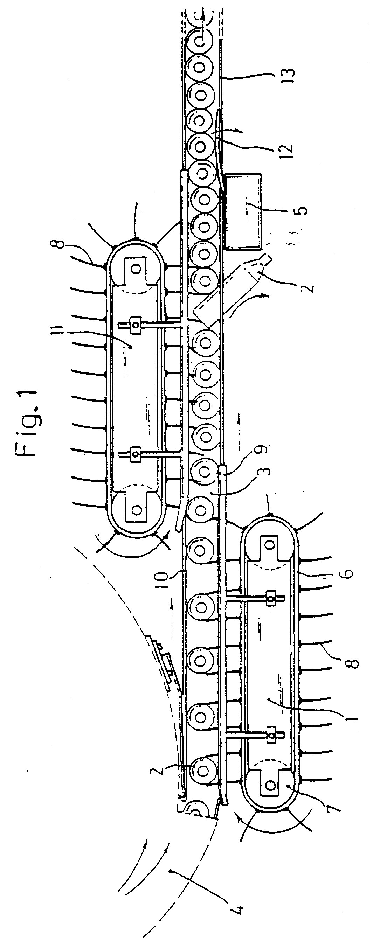

- la figure 1 est une vue de dessus de l'ensemble comportant les divers moyens constituant les perfectionnements;

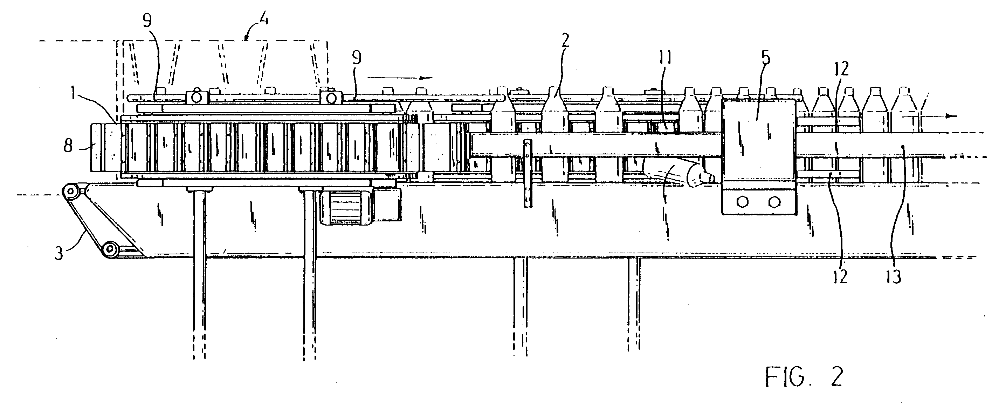

- la figure 2 est une vue en élévation dudit ensemble;

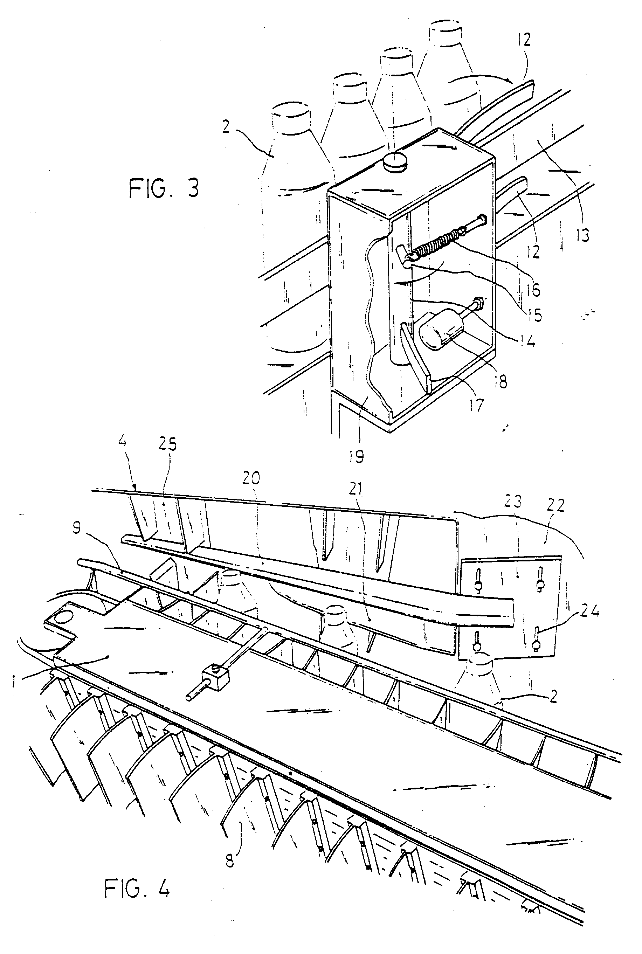

- la figure 3 est une vue en détail du deuxième moyen;
- la figure 4 est une vue de détail d'un profil contribuant au transfert des récipients vers le premier moyen.

L'ensemble représenté aux figures comporte:
- au moins un premier moyen 1 de freinage et d'entraînement des récipients 2, animé d'un mouvement de translation, qui se trouve sur le parcours desdits récipients, le long de la partie de la bande transporteuse 3 contiguë à la machine positionneuse 4, et dont l'action provoque une diminution de la vitesse de sortie et d'avance sur la bande desdits récipients avec pour effet, le rapprochement relatif de ces derniers, ledit moyen coopérant en plus au maintien des récipients en position verticale et évacuant vers l'extérieur ceux qui ont été renversés accidentellement;
- un deuxième moyen 5 de freinage des récipients opérant transversalement et latéralement sur le parcours desdits récipients sur la bande transporteuse, situé en aval du premier moyen cité, dont l'action a pour effet de rapprocher les récipients en les maintenant jusqu'à ce qu'ils soient au contact les uns des autres et de permettre leur passage, dans cette situation, par une interaction permanente avec ledit deuxième moyen de freinage.

Chaque premier moyen de freinage et d'entrainement des récipients est constitué par une bande sans fin 6, animée d'un mouvement de translation dans le même sens que celui de la bande transporteuse 3, montée entre deux cylindres 7 à axes perpendiculaires au plan de la bande transporteuse, l'un d'entre eux étant moteur et l'autre entraîné, installée latéralement sur un côté de la bande transporteuse et pourvue d'une pluralité de palettes flexibles 8 disposées en rangée, alignées avec ladite bande transporteuse, passant sur l'une des barres d'appui latérales 9, situées dans la zone de passage des récipients et ayant une longueur telle qu'elles s'étendent jusqu'à, approximativement, une zone médiane du parcours des récipients, délimitée par les deux barres d'appui latérales 9 et 10, de manière à maintenir les récipients en position verticale et à les rapprocher en les freinant sous l'effet d'une vitesse de déplacement des palettes inférieure à celle de la bande transporteuse.

Un deuxième premier moyen 11, similaire au précédent, peut être adjoint audit ensemble, dans le cas des machines positionneuses fonctionnant à des vitesses élevées.

Les deux dits moyens sont donc constitués par deux bandes sans fin 1 et 11 pourvues de palettes flexibles 8, fonctionnant à des vitesses différentes, situées des deux côtés de la bande transporteuse, dans la zone contiguë à la machine positionneuse, et disposées de telle manière que les palettes 8 couvrent deux secteurs consécutifs de la bande transporteuse.

Le deuxième moyen 5 de freinage des récipients, opérant transversalement et latéralement sur le parcours des récipients, est constitué par un élément qui s'interpose, d'un côté latéral de la bande transporteuse, à l'avance des récipients et qui est réalisé notamment au moyen de barres ou de baguettes 12 qui s'étendent au-dessous d'une des barres d'appui latérales 13, vers l'intérieur du parcours des récipients, au-dessus de la bande transporteuse, lesdites barres étant montées pivotantes autour d'un axe tournant 14, pourvu d'un appendice en saillie 15 relié à un moyen élastique 16, réglable en intensité, qui tend à déplacer lesdites barres 12 jusqu'à la position qui permet leur interposition à l'avance des récipients, provoquant leur freinage jusqu'à leur juxtaposition et permettant ensuite leur passage par pivotement vers un bord latéral du moyen de freinage sous la pression de la file de récipients en mouvement, de telle manière que les barres glissent sur la partie latérale des récipients.

L'axe tournant comporte également un appendice 17 destiné à limiter la course des barres 12 au moyen d'une butée 18 solidaire du boîtier 19. L'ensemble comporte en addition, un profil 20 avec une extension 21 en forme de panneau élargi, conçu avec la possibilité d'être réglé en hauteur sur la paroi latérale du carter de la machine positionneuse 22 près de la partie haute de l'ouverture d'évacuation des récipients 2, orienté de telle manière qu'il opère comme un guide complémentaire déviant les récipients 2 dans la direction de la bande transporteuse et coopérant au maintien des récipients en position verticale, pendant la phase de transition, sur le plan de ladite bande transporteuse, ledit panneau latéral évitant le renversement des récipients dans la zone de ladite ouverture.

Le profil en question est relié au carter de la machine positionneuse au moyen d'une platine 23 pourvue d'ouvertures 24 permettant son réglage en hauteur et son verrouillage dans la position désirée. Le tambour de la machine positionneuse comporte les goulottes 25 de guidage en chute des récipients.

Le moyen 1, placé à la sortie de la machine positionneuse, se déplace à une vitesse inférieure à celle du tambour porteur des goulottes de guidage en chute et également à celle de déplacement de la bande transporteuse 3.

Dans le cas de l'utilisation du moyen 11, celui-ci se déplace par exemple à la même vitesse que celle de la bande transporteuse.

Bien entendu, l'invention n'est pas limitée aux modes de réalisation décrits et représentés pour lesquels on pourra prévoir d'autres variantes sans pour cela sortir du cadre de l'invention.

## Revendications

1. Perfectionnements apportés aux machines automatiques de positionnement vertical de récipients (2), de forme et de dimensions quelconques, et d'alimentation, en ligne, d'une installation d'embouteillage, du type comprenant des logements pour la réception et le transport des récipients et des moyens pour le transfert, par gravité, en position verticale, goulot dirigé vers le haut, vers l'intérieur d'une série de goulottes de guidage en chute, équidistantes, délimitées par un carter enveloppant, en circuit fermé, animées d'un mouvement de translation le long dudit circuit, desquelles sont évacués lesdits récipients, au travers d'une ouverture du carter de la machine positionneuse (4) et avec la coopération de profils de déviation qui agissent sur la partie basse des récipients, jusqu'à une bande transporteuse (3) pourvue de barres d'appui latérales, **caractérisés** en ce qu'ils comportent, à la sortie des récipients (2) de la machine positionneuse:
- au moins un premier moyen (1) de freinage et d'entrainement des récipients (2), animé d'un mouvement de translation, qui se trouve sur le parcours desdits récipients, le long de la partie de la bande transporteuse (3) contiguë à la machine positionneuse (4), et dont l'action provoque une diminution de la vitesse de sortie et d'avance sur la bande desdits récipients avec pour effet le rapprochement relatif de ces derniers, ledit moyen coopérant en plus au maintien des récipients en position verticale et évacuant vers l'extérieur ceux qui ont été renversés accidentellement;
- un deuxième moyen (5) de freinage des récipients opérant transversalement et latéralement sur le parcours desdits récipients sur la bande transporteuse, situé en aval du premier moyen cité, dont l'action a pour effet de rapprocher les récipients en les maintenant jusqu'à ce qu'ils soient au contact les uns des autres et de permettre leur passage, dans cette situation, par une intéraction permanente avec ledit deuxième moyen de freinage.

2. Perfectionnements, selon la revendication 1, caractérisés en ce que chaque premier moyen de freinage et d'entrainement des récipients est constitué par une bande sans fin (6), animée d'un mouvement de translation dans le même sens que celui de la bande transporteuse (3), montée entre deux cylindres (7) à axes perpendiculaires au plan de la bande transporteuse, l'un d'entre eux étant moteur et l'autre entraîné, installée latéralement sur un côté de la bande transporteuse et pourvue d'une pluralité de palettes flexibles (8), disposées en rangée, alignées avec ladite bande transporteuse, passant sous l'une des barres d'appui latérales (9), situées dans la zone de passage des récipients et ayant une longueur telle qu'elles s'étendent jusqu'à approximativement, une zone médiane du parcours des récipients, délimitée par les deux barres d'appui latérales (9) et (10), de manière à maintenir les récipients en position verticale et à les rapprocher en les freinant sous l'effet d'une vitesse de déplacement des palettes inférieure à celle de la bande transporteuse.

3. Perfectionnements, selon la revendication 1, caractérisés en ce qu'ils intègrent deux bandes sans fin (1) et (11), pourvues de palettes flexibles (8), fonctionnant à des vitesses différentes, situées des deux côtés de la bande transporteuse, dans la zone contiguë à la machine positionneuse, et disposées de telle manière que les palettes couvrent deux secteurs consécutifs de la bande transporteuse.

4. Perfectionnements, selon la revendication 1, caractérisés en ce que le moyen de freinage, opérant transversalement et latéralement sur le parcours des récipients, est constitué par un élément (12) qui s'interpose, d'un côté latéral de la bande transporteuse, à l'avance des récipients et qui est réalisé notamment au moyen de barres ou de baguettes qui s'étendent au-dessus et au-dessous d'une des barres d'appui latérales (13), vers l'intérieur du parcours des récipients, au-dessus de la bande transporteuse, lesdites barres étant montées pivotantes autour d'un axe tournant (14), pourvu d'un appendice en saillie (15) relié à un moyen élastique (16), réglable en intensité, qui tend à déplacer lesdites barres jusqu'à la position qui permet leur interposition à l'avance des récipients, provoquant leur freinage jusqu'à leur juxtaposition et permettant ensuite leur passage par pivotement vers un bord latéral du moyen de freinage sous la pression de la file de récipients en mouvement, de telle manière que les barres glissent sur la partie latérale des récipients.

5. Perfectionnements, selon la revendication 1. caractérisés en ce qu'ils comprennent, en addition, un profil (10) avec une extension (21) en forme de panneau élargi, conçu avec la possibilité d'être réglé en hauteur sur la paroi latérale du carter (22) de la machine positionneuse, près de la partie haute de l'ouverture d'évacuation des récipients, orienté de telle manière qu'il opère comme un guide complémentaire déviant lesdits récipients 2 dans la direction de la bande transporteuse 3 et coopérant au maintien des récipients 2 en position verticale, pendant la phase de transition, sur le plan de ladite bande transporteuse 3, ledit panneau latéral 21 évitant le renversement des récipients dans la zone de ladite ouverture.

## Claims

1. Improvements in automatic machines for uprightly positioning containers (2), of any shape and size, and for feeding said containers aligned to a bottling plant, of the type comprising some recesses adapted to receive and transporting the containers and means for transferring them by gravity, in a vertical position with its neck upward, towards the interior of a plurality of equidistant guiding and discharging chutes, delimited by a surrounding housing, movable along an enclosed circuit and an exit aperture in said housing of the positing machine (4) to remove said containers from said chutes through said aperture whit the cooperation of some profiles which acts on the lower part of the containers deflecting them in the direction of a moving conveyor belt (3), provided with side supporting bars, characterized in that they comprise at the exit of the containers (2) of the positioning machine:
- at least one first means (1) for braking and dragging containers (2), having a translation movement, located on the run of the containers, along a portion of the moving conveyor belt (3) proximate the positioning machine (4), and whose action causes a decreasing of the output and forward speed on the belt of the containers to effect relative movement of the containers closer together, said means also cooperating in addition to maintain the containers in an upright position and ejecting out of the moving conveyor the ones that are accidentally turned down;
- a second means (5) for braking the containers, which operates transversely and laterally on the run of the containers along the moving conveyor belt, located downstream of first means, to effect further relative movement of the containers until they are in contact with each other and to allow their passage in this contacting condition, by a permanent interaction with the second braking means.

2. Improvements, according to the claim 1, characterized in that each first means for braking and dragging containers is constituted by an endless belt (6) having a translation movement in the same direction as that of the moving conveyor belt (3), mounted between two rotatable cylinders (7) mounted for rotation on axes perpendicular to the plane of the moving conveyor belt, one of the cylinders being the drive cylinder and the other being driven, installed laterally on one side of the moving conveyor and said endless belt thereof being provided with a plurality of flexible paddles (8) mounted thereon in a row aligned with the moving conveyor belt and passing below one of the side supporting bars (9) located in the area of passage of the containers and having a length to extend until approximately a medium area of the container run limited by the two side supporting bars (9) and (10) in such a way as to keep the containers in upright position and to effect a further approach thereof while braking them as a consequence of an advancing speed of the paddles inferior to the speed of the conveyor belt.

3. Improvements, according to the claim 1, characterised in that they comprise two endless belts (1) and (11) provided with flexible paddles (8) operating at different speeds, located on both sides of the moving conveyor belt, in an area adjacent to the positioning machine and arranged in such a way that the paddles cover two consecutive sectors of the moving conveyor belt.

4. Improvements, according to the claim 1 characterised in that the means for braking containers, that operates transversely and laterally on the run of the containers, is constituted by one element (12) that is interposed on a lateral side of the moving conveyor belt in front of the containers, and that is constituted mainly by rods or straps that extend above and below one of the side supporting bars (13)inwardly of the container run, over the moving conveyor belt, said rods being assembled for swivelling around a rotatable shaft (14) provided with a protruding appendage (15) associated with an elastic means (16) adjustable in intensity, so that it tends to move said rods (10) until a position in front of the container run, causing their braking until the juxtaposition of container occurs and allowing thereafter their passage onto a side surface of the braking means under the pressure of the row of containers as they advance along the moving conveyor, in such a way that the bars slide on the side surfaces of the containers.

5. Improvements, according to claim 1, characterised in that the assembly further comprises a profile (10) with an enlarged-panel-shaped extension (21), adjustable in height, located on the side wall (22) of the positioning machine near the upper part of the container exit portion, oriented in such a way as to operate as a complementary guide deflecting the containers (2) in the direction of the moving conveyor belt (3) and cooperating to keep the containers (2) in an upright position during their transfer on to the moving conveyor belt (3), said side panel (21) avoiding the containers tipping over in the area of said exit portion.

## Patentansprüche

1. Verbesserungen an automatischen Maschinen zur senkrechten Ausrichtung von Behältern, letztere jeglicher Form und Größe und Reihenzuführung, einer Abfüllanlage, welche Mittel zur Aufnahme und Beförderung aufweist, sowie Mittel zur Weitergabe der Behälter in senkrechter Stellung, durch Schwerkraft und mit dem Behälterhals nach oben gerichtet, in eine Reihe von gleichweit entfernten Fallschächten, welche von einem Gehäuse umfaßt werden und einen geschlossenen Kreislauf bilden, beinhaltet, wobei besagte Mittel eine Fortbewegung entlang ebengenannten Kreislaufs aufweisen, aus welchem die Behälter durch eine Öffnung des Gehäuses der Ausrichtmaschine (4), mit Hilfe von Ablenkprofilen, die auf die Behälterunterseite wirken, auf ein Förderband (3), welches mit seitlichen Haltestangen versehen ist, fallen, dadurch gekennzeichnet, daß diese, an der Behälteraustrittsöffnung der Ausrichtmaschine, folgendes aufweisen:
- mindestens, ein erstes Mittel (1) zur Abbremsung und Mitnahme der Behälter (2), welches eine Fortbewegung aufweist und sich entlang der Bewegungsrichtung besagter Behälter befindet, entlang des an die Ausrichtmaschine (4) angrenzenden Förderbandabschnittes (3) und dessen Einwirkung eine Minderung der Austritts- und Vorlaufgeschwindigkeit ebengenannter Behälter auf dem Förderband bewirkt, so daß eine relative Annäherung dieser zustande kommt; dieses Mittel ist auch bei Haltung der senkrechten Lage der Behälter behilflich und zieht diejenige Behälter aus, die unvorsehentlich umgekippt sind;
- ein zweites Bremsmittel (5) der Behälter, welches in Quer- und Längsrichtung der Bewegungsrichtung besagter Behälter auf dem Förderband wirkt und welches unterhalb ersteren Mittels liegt, dessen Einwirkung die Behälter untereinander annähert, bis diese in Kontakt kommen und deren Weiterbeförderung in dieser Lage ermöglicht, wobei eine kontinuierliche Zwischenwirkung zu genanntem zweiten Mittel besteht.

2. Verbesserungen nach Anspruch 1, dadurch gekennzeichnet, daß jedes erste Brems- und Mitnahmemittel der Behälter aus einem Endlosband (6) besteht, welches die gleiche Bewegungsrichtung des Förderbandes (3) aufweist, welches zwischen zwei Rollen (7) mit zur Förderbandebene senkrechten Achsen aufgebaut ist, wobei eine der Rollen eine Antriebsrolle ist und die andere eine Laufrolle ist und welches sich seitlich zum Förderband befindet und eine Vielzahl flexibler Schaufel aufweist, die reihenweise angebracht sind, zu besagtem Förderband ausgerichtet sind und unter eine der seitlichen Haltestangen (9) laufen und im Durchgangsbereich der Behälter liegen, wobei diese Schaufel eine Länge aufweisen, die, im wesentlichen, der Hälfte des Durchgangsbereiches der Behälter entspricht, welcher von den zwei seitlichen Haltestangen (9) und (10) begrenzt wird, so daS diese Schaufeln die Behälter in senkrechter Lage halten und untereinander annähert und abbremst, da die Umlaufgeschwindigkeit der Schaufeln kleiner ist als diejenige des Förderbandes.

3. Verbesserungen nach Anspruch 1, dadurch gekennzeichnet, daß diese zwei Endlosbänder (1) und (11) beinhalten, die mit flexiblen Schaufeln (8) versehen sind und zu verschiedenen Geschwindigkeiten arbeiten und zu beiden Seiten des Förderbandes, in dem an die Ausrichtmaschine anliegenden Bereich gelegen sind, so daß die Schaufeln zwei aufeinanderfolgende Abschnitte des Förderbandes abdecken.

4. Verbesserungen nach Anspruch 1, dadurch gekennzeichnet, daß das Bremsmittel, bei Quer- und Seiteneinwirkung zur Bewegungsrichtung der Behälter, aus einem Element (12) besteht, welches aus einer Seite des Förderbandes entgegen dem Behältervorlauf wirkt und vorteilhaft die Form von Stangen oder Stäben aufweist, welche sich unter- und oberhalb der seitlichen Haltestangen (13) befinden und in die Vorlaufsrichtung, oberhalb des Förderbandes hineinragen, wobei genannte Schwenkstangen um eine drehbare Achse (14) aufgebaut sind, die einen herausragenden Zapfen (15) aufweist, der mit einem elastischen Mittel (16) verbunden ist, dessen Federkraft verstellbar ist und welches ebengenannte Schwenkstangen zu einer Lage bringt, die entgegen dem Vorlauf der Behälter wirkt, so daß diese aneinandergereiht werden und deren weiterer Vorlauf durch Abschwenkung, bedingt durch den der sich bewegenden Behälterreihe ausgeübten Druckes, zur Seitenkante des Bremsmittels, so daß die Schwenkstangen über die Behälterseiten gleiten, ermöglicht wird.

5. Verbesserungen nach Anspruch 1, dadurch gekennzeichnet, daß diese außerdem ein Profil (20), mit einem Anbau (21), in Form eines erweiterten Bleches beinhalten, welches die Möglichkeit einer Höhenverstellung bezüglich der Seitenwand des Gehäuses (22) der Ausrichtmaschine aufweist und in der Nähe des oberen Bereiches der Austrittsöffnung der Behälter (2) liegt und so ausgerichtet ist, daß es als Zusatzführung arbeitet und die Behälter in Richtung des Förderbandes umlenkt und bei der Beibehaltung der Senkrechtlage der Behälter (2) während deren Vorlauf auf dem Förderband (3) behilflich ist, indem ebengenanntes seitliches Blech (21) das Umkippen der Behälter im Bereich der Austrittsöffnung verhindert.
